Europäisches Patentamt

European Patent Office

Office européen des brevets

(19)

(11) **EP 0 673 324 B1**

(12) **FASCICULE DE BREVET EUROPEEN**

(45) Date de publication et mention
de la délivrance du brevet:
**21.05.1997 Bulletin 1997/21**

(21) Numéro de dépôt: **94902002.8**

(22) Date de dépôt: **08.12.1993**

(51) Int. Cl.$^6$: **B60C 17/06**, B60C 15/024,
B60B 21/02, B60B 21/10

(86) Numéro de dépôt international:
**PCT/FR93/01210**

(87) Numéro de publication internationale:
**WO 94/13498 (23.06.1994 Gazette 1994/14)**

(54) **PNEUMATIQUE, JANTE, ANNEAU DE SOUTIEN ET ENSEMBLE COMPRENANT LESDITS ELEMENTS**

LUFTREIFEN, FELGE, NOTLAUFRING UND EINHEIT BESTEHEND AUS DENSELBEN

TYRE, RIM, SUPPORTING RING AND ASSEMBLY COMPRISING SAME

(84) Etats contractants désignés:
**AT BE CH DE DK ES FR GB IT LI LU NL SE**

(30) Priorité: **11.12.1992 FR 9215061**

(43) Date de publication de la demande:
**27.09.1995 Bulletin 1995/39**

(73) Titulaire: **COMPAGNIE GENERALE DES
ETABLISSEMENTS
MICHELIN - MICHELIN & CIE
63040 Clermont-Ferrand Cédex (FR)**

(72) Inventeurs:
• **DRIEUX, Jean-Jacques
F-63530 Volvic (FR)**

• **LACOUR, Jean-Charles
F-63000 Clermont-Ferrand (FR)**
• **MUHLHOFF, Olivier
F-63100 Clermont-Ferrand (FR)**
• **POMPIER, Jean-Pierre
F-63530 Volvic (FR)**

(74) Mandataire: **Devaux, Edmond-Yves
Michelin & Cie,
Service SGD/LG/PI Ladoux
63040 Clermont-Ferrand Cedex 01 (FR)**

(56) Documents cités:
**EP-A- 0 135 468        EP-A- 0 138 027
DE-A- 3 724 658        DE-C-  858 514
US-A- 4 248 286        US-A- 4 406 316**

## Description

La présente invention a pour objet la réalisation d'ensembles formés de pneumatiques à carcasse radiale et de jantes de montage, de préférence "monobloc", dont certains au moins peuvent s'avérer utiles dans le cas de roulage où la pression de gonflage s'abaisse anormalement par rapport à la pression nominale d'emploi, dite pression de service, la pression de gonflage pouvant même devenir nulle.

Les principales difficultés rencontrées dans le cas d'un roulage à plat ou à pression faible concernent les risques de décoincement des bourrelets du pneumatique et en particulier le décoincement du bourrelet situé du côté extérieur du pneumatique monté du côté extérieur du véhicule. Les techniques proposées et bien connues pour éviter de tels décoincements, et en particulier celle consistant à disposer axialement à l'intérieur du siège extérieur de jante une saillie ou hump de faible hauteur, tendent à augmenter les difficultés de montage et de démontage des pneumatiques.

Une solution, susceptible d'être appliquée au problème de décoincement de bourrelets, est celle décrite dans le brevet français 1139619, qui concerne un ensemble formé d'un pneumatique et d'une jante tels que les bords souples du pneumatique, contrairement aux bourrelets usuels, viennent, sous l'effet de la pression de gonflage, enserrer des butées de jante destinées à maintenir lesdits bords écartés l'un de l'autre. Cette solution demande une armature de carcasse pour le moins spéciale et non conforme au compromis de propriétés requises pour un pneumatique actuel.

Certaines solutions antérieures préconisent l'addition à une jante, telle que décrite précédemment, d'un appui de soutien, intégré ou rapporté et fixé par tout moyen disponible. Que ce soit avec hump ou sans hump, les ensembles comportant des jantes avec appui de soutien sont connus, et les demandes allemande 36 26 012 et française 2 560 121 montrent de tels ensembles. Leur emploi ne s'est pas cependant généralisé car, malgré les progrès réalisés, se posent aussi de difficiles problèmes de montage. La demande française, citée ci-dessus, décrit un procédé de montage permettant la suppression de nombreuses difficultés : le basculement et l'ovalisation d'un des bourrelets du pneumatique permettent le passage de la jante, munie de son appui de soutien à l'intérieur du pneumatique, si ladite jante est présentée avec son axe de rotation perpendiculaire à l'axe de rotation de l'enveloppe pneumatique, les bourrelets étant ensuite, à l'aide des gorges de montage situées axialement de part et d'autre de l'appui de soutien, placés sur leurs sièges de jante respectifs.

Si l'on appelle S la largeur hors tout de la jante de montage mesurée axialement entre les extrémités des deux rebords, $D_J$ le diamètre de la jante mesuré au niveau de l'intersection entre le rebord de jante et la génératrice tronconique du siège de jante, celle-ci étant vue en section méridienne, H' la hauteur de l'appui mesurée par rapport à la parallèle à l'axe de rotation de la jante passant par ledit point d'intersection, et $D_B$ le diamètre du bourrelet du pneumatique mesuré sur une parallèle au plan équatorial du pneumatique, parallèle passant par le centre de la tringle, la méthode décrite ci-dessus n'est pas applicable dans le cas où la quantité $2\pi_{DB}$ est inférieure à $2(D_J + 2H' + S)$, d'où l'impossibilité d'avoir à disposition des pneumatiques de rapport de forme usuel avec un appui intérieur efficace.

Les difficultés de montage et de démontage des pneumatiques, montés sur de telles jantes, sont encore accentuées de fait par la venue des pneumatiques récents à rapport de forme abaissé, et en outre comprenant souvent des bourrelets très renforcés.

De façon générale, l'invention a pour but de proposer d'autres solutions permettant d'améliorer les conditions de fonctionnement et d'utilisation des pneumatiques à carcasse radiale en cas de roulage en mode dégradé à pression nulle ou faible, solutions concernant aussi bien le pneumatique que la jante et que l'ensemble formé par le pneumatique, la jante avec ou sans appui de soutien.

A cet effet, et selon un premier aspect de l'invention, un ensemble roulant comprenant au moins un pneumatique à armature de carcasse radiale ancrée dans chaque bourrelet à un anneau de renforcement, et une jante, délimitée axialement par un premier bord et un deuxième bord de jante, et munie d'un premier siège et d'un deuxième siège de jante, est caractérisé en ce que, vu en section méridienne,

a) au moins le premier siège de jante a une génératrice telle que l'extrémité axialement extérieure de ladite génératrice est distante de l'axe de rotation d'une quantité inférieure à la distance séparant son extrémité axialement intérieure, et est délimité axialement à l'extérieur par une saillie ou hump de faible hauteur, et en ce que

b) le pneumatique, monté sur jante et gonflé à sa pression de service, est doté d'une armature de carcasse radiale possédant un profil méridien à sens de courbure constant, au moins dans le flanc et le bourrelet situés du même côté de l'ensemble que le premier siège de jante.

Le premier siège de jante est dit incliné vers l'extérieur de l'ensemble.

De manière avantageuse, l'ensemble, tel que décrit ci-dessus, comprend au moins un rebord de jante adjacent axialement à l'un des sièges de jante, le diamètre maximal dudit rebord étant supérieur au diamètre de toute partie de la jante comprise entre ledit rebord et le bord de la jante axialement le plus proche dudit rebord. On peut prévoir au moins une gorge de montage, ladite gorge de montage prolongeant préférentiellement axialement à l'intérieur un des sièges de jante; ou dans le cas de la présence d'un rebord de jante, prolongeant préférentiellement axialement à l'intérieur ledit rebord.

Selon un deuxième aspect de l'invention, un ensemble roulant comprenant un pneumatique à armature de carcasse radiale, ancrée dans chaque bourrelet à un anneau de renforcement, une jante, délimitée axialement par un premier bord et un deuxième bord de jante, et munie d'un premier siège et d'un deuxième siège de jante, et un appui de soutien de bande de roulement, est caractérisé en ce que, vu en section méridienne,

a) au moins le premier siège de jante a une génératrice telle que l'extrémité axialement extérieure de ladite génératrice est distante de l'axe de rotation d'une quantité inférieure à la distance séparant son extrémité axialement intérieure, ladite jante comprenant au moins une portée destinée à recevoir un appui de soutien de bande de roulement, disposée entre les extrémités axialement intérieures des deux sièges et ayant une génératrice dont le diamètre minimum, qui est le diamètre de l'une de ses extrémités, est au moins égal au diamètre de toute partie de jante comprise axialement entre ladite extrémité et le bord de jante correspondant au siège de jante le plus proche axialement de ladite extrémité, et en ce que

b) le pneumatique, monté sur jante et gonflé à sa pression de service, est doté d'une armature de carcasse radiale, possédant un profil méridien à sens de courbure constant, au moins dans le flanc et le bourrelet situés du même côté de l'ensemble que le premier siège de jante, et en ce que

c) l'appui de soutien annulaire est ovalisable, de préférence inextensible circonférentiellement, et enfilable sur la portée de jante.

On entend par diamètre de la portée, le diamètre des parties de ladite portée qui seront en contact avec l'appui de soutien.

L'ensemble, selon ce deuxième aspect de l'invention, peut comprendre au moins une gorge de montage, axialement située entre un des sièges de jante et la portée destinée à recevoir l'appui de soutien. Toujours selon ce deuxième aspect de l'invention, l'ensemble comprend préférentiellement au moins le premier siège de jante, délimité axialement à l'extérieur par une saillie ou hump de faible hauteur. De même, la jante d'un tel ensemble peut comprendre au moins un rebord de jante, adjacent axialement à l'un des sièges de jante, le diamètre maximal dudit rebord étant supérieur au diamètre de toute partie de la jante comprise entre ledit rebord et le bord de la jante axialement le plus proche dudit rebord. La portée, destinée à recevoir l'appui de soutien, peut être une portion de révolution avantageusement adjacente, axialement à l'intérieur, à l'un des sièges de jante, la gorge de montage étant située axialement entre ladite portée et le rebord de jante, et l'appui de soutien, placé sur la portée, servant alors de butée axiale au bourrelet du pneumatique qui lui est adjacent.

Un très bon compromis des propriétés requises par un ensemble, comprenant un pneumatique à armature de carcasse radiale ancrée dans chaque bourrelet à un anneau de renforcement, une jante, délimitée axialement par un premier bord et un deuxième bord de jante, et munie d'un premier siège et d'un deuxième siège de jante, et un appui de soutien de bande de roulement, et conforme à l'invention, est obtenu lorsque ce dernier est composé :

a) d'une jante ayant au moins le premier siège de jante dont la génératrice est telle que son extrémité axialement extérieure est distante de l'axe de rotation d'une quantité inférieure à la distance séparant son extrémité axialement intérieure, et étant délimité axialement à l'extérieur par une saillie ou hump, ladite jante comprenant au moins une portée destinée à recevoir un appui de soutien de bande de roulement, ladite portée étant axialement adjacente intérieurement au premier siège de jante, et ayant une génératrice dont le diamètre minimum, qui est le diamètre de l'une de ses extrémités, est au moins égal au diamètre de toute partie de jante comprise axialement entre ladite extrémité et le bord de jante correspondant au premier siège de jante, alors qu'un rebord de jante prolonge axialement à l'intérieur le deuxième siège de jante, ledit rebord étant lui même prolongé axialement à l'intérieur par une gorge de montage, située entre ce rebord et ladite portée, et

b) d'un pneumatique qui, monté sur jante et gonflé à sa pression de service, est doté d'une armature de carcasse radiale possédant un profil méridien à sens de courbure constant, au moins dans le flanc et le bourrelet situés du même côté de l'ensemble que le premier siège de jante, et

c) d'un appui de soutien annulaire, ovalisable, de préférence inextensible circonférentiellement, et enfilable sur la portée de jante.

Une gorge de montage servant, éventuellement, au montage des bourrelets sur leurs sièges respectifs de jante, possède une profondeur et une largeur axiale qui est fonction en premier lieu de la largeur axiale des bourrelets et du diamètre intérieur des anneaux de renforcement, des tringles par exemple, et le cas échéant de la largeur de la portion de révolution, ou de l'appui de soutien.

La profondeur de la gorge peut paraître, dans certains cas, excessive en ce qu'elle diminue fortement l'espace libre destiné aux organes mécaniques de roulage. De même la largeur axiale de la gorge de montage est un empêchement notoire à l'élargissement axial de l'appui de soutien, lorsqu'il est avantageux d'en utiliser.

En vue de minimiser lesdits inconvénients, et selon un autre aspect de l'invention, un ensemble roulant comprenant au moins un pneumatique à armature de carcasse radiale ancrée dans chaque bourrelet à un anneau de renforcement, et une jante, délimitée axialement par un premier bord et un deuxième bord de jante, et munie d'un premier siège et d'un deuxième siège de jante, est caractérisé en ce que, vu en section méridienne

a) au moins le premier siège de jante a une génératrice telle que l'extrémité axialement extérieure de ladite génératrice est distante de l'axe de rotation d'une quantité inférieure à la distance séparant son extrémité axialement intérieure, lesdits sièges ayant des diamètres différents, et en ce que
b) le pneumatique, monté sur jante et gonflé à sa pression de service, est doté d'une armature de carcasse radiale possédant un profil méridien à sens de courbure constant, au moins dans le flanc et le bourrelet situés du même côté de l'ensemble que le premier siège de jante.

Dans le cas d'un ensemble conforme à ce dernier aspect de l'invention, il est aussi avantageux de munir la jante d'un premier siège, délimité axialement à l'extérieur par une saillie ou hump de faible hauteur. Ledit ensemble peut comprendre une jante munie d'au moins un rebord de jante, adjacent axialement à l'un des sièges de jante, le diamètre maximal dudit rebord étant supérieur au diamètre de toute partie de la jante comprise entre ledit rebord et le bord de la jante axialement le plus proche dudit rebord. De façon avantageuse, le rebord de jante prolonge axialement à l'intérieur le siège de jante de plus grand diamètre. L'ensemble, selon ce dernier aspect de l'invention, et dans lequel le pneumatique a des sièges de bourrelets asymétriques en diamètre, peut aussi avantageusement comprendre une jante ayant au moins une portée destinée à recevoir un anneau de soutien, ladite portée étant axialement adjacente intérieurement au siège de plus petit diamètre, et ayant un diamètre minimum, qui est le diamètre de l'une de ses extrémités, au moins égal au diamètre de toute partie de jante comprise axialement entre ladite extrémité et le bord de jante correspondant au siège de jante le plus proche axialement de ladite extrémité, et un appui de soutien annulaire ovalisable, de préférence inextensible circonférentiellement, enfilable sur la portée de jante, ledit appui étant maintenu en position axiale par au moins un bourrelet du pneumatique monté.

Dans l'ensemble selon le dernier aspect de l'invention, la jante peut aussi être munie d'une gorge de montage, dont la profondeur ou hauteur peut avoir une plus faible valeur que dans les cas usuels, et qui sera préférentiellement axialement adjacente à l'intérieur au rebord de jante, qui prolonge lui même axialement à l'intérieur le siège de plus grand diamètre, et comprise entre la portée et ledit rebord.

Le premier siège de jante, de l'ensemble conforme à ce troisième aspect de l'invention, est préférentiellement le siège de plus petit diamètre. Un ensemble conforme à l'un des trois aspects de l'invention peut comprendre une jante avec un deuxième siège de jante ayant une génératrice telle que l'extrémité axialement extérieure de ladite génératrice soit distante de l'axe de rotation d'une quantité inférieure à la distance séparant son extrémité axialement intérieure, ledit siège étant prolongé axialement à l'extérieur par une saillie ou hump, et ledit ensemble ayant un pneumatique, monté sur jante et gonflé à sa pression de service, qui est doté d'une armature de carcasse radiale possédant un profil méridien à sens de courbure constant sur toute sa longueur.

Dans le cas d'une jante à sièges de différents diamètres, l'invention vise aussi la combinaison d'au moins une portée, destinée à recevoir un appui de soutien de bande de roulement, prolongeant axialement à l'intérieur le siège de jante de plus petit diamètre, et d'une gorge de montage entre ladite portée et le siège de jante de plus grand diamètre.

Les diamètres des sièges de la jante étant différents, le diamètre d'un siège de jante étant, comme connu, le diamètre de son extrémité la plus éloignée de l'axe de rotation, les diamètres de saillies de jante sont en conséquence différents. Le diamètre de la saillie la plus grande est avantageusement supérieur au diamètre de l'autre saillie, d'une quantité comprise entre 2,5% et 10 % du diamètre le plus petit. Le pneumatique destiné à être monté sur une telle jante est normalement asymétrique pour les diamètres de ses bourrelets, et de ses tringles d'ancrage.

Les sièges de jante ont avantageusement, dans tous les cas évoqués précédemment, des génératrices tronconiques faisant avec l'axe de rotation un angle $\alpha'$, compris entre 4° et 30°. De même, la (les) paroi(s) intérieure(s) de la (des) saillie(s) sera (seront) préférentiellement tronconique(s).

La portée de jante sur laquelle sera enfilé l'anneau de soutien, peut avantageusement se présenter comme une portée cylindrique; son diamètre minimum D peut avantageusement être égal au diamètre nominal de la jante. De même, il est intéressant de prévoir sur son bord axialement intérieur une saillie de positionnement, servant à l'intérieur de butée à l'anneau de soutien. La gorge de montage peut alors être ménagée entre cette saillie et un rebord de jante adjacent au siège opposé à celui autour duquel peut être enfilé l'anneau de soutien.

La largeur axiale L comprise entre cette saillie de positionnement et la saillie axialement extérieure, correspondant au siège adjacent à la portée, est avantageusement au plus égale à la moitié de la largeur maximale S de la jante, comprise entre les deux bords de jante.

La hauteur de la (des) saillie(s) axialement extérieure(s) est avantageusement au plus égale à 1,25% du diamètre nominal de la jante de montage.

De manière préférentielle, le pneumatique de l'ensemble est doté d'une armature de carcasse radiale possédant un profil méridien dont la (les) tangente(s) AT au(x) point(s) de tangence A dudit profil avec l'(les) anneau(x) de renforcement du (des) bourrelet(s) fait (font) avec l'axe de rotation un (des) angle(s) $\phi$ ouvert(s) vers l'extérieur d'au moins 70°, et de préférence supérieur(s) à 80°, un tel profil d'armature de carcasse permettant de modifier les rigidités transversales du pneumatique et de modifier les paramètres du compromis qui déterminent les performances dudit pneumatique.

Une meilleure assise du bourrelet, monté du côté de la jante où celle ci possède un rebord de jante, est obtenue si la face axialement extérieure dudit rebord fait avec une perpendiculaire à l'axe de rotation un angle $\theta$ compris entre 0° et 15°. Cette assise peut être aussi obtenue, particulièrement dans le cas où les deux sièges de jante sont inclinés vers l'extérieur, par l'inclinaison vers l'intérieur du pneumatique de la trajectoire de l'armature de carcasse dans le bourrelet; autrement dit, les tangentes au profil méridien de l'armature de carcasse, aux points où ledit profil est tangent aux anneaux de renforcement de bourrelet, sont inclinées par rapport à l'axe de rotation d'angles $\phi$, ouverts vers l'extérieur, supérieurs à 90°, la ligne de plus grande largeur axiale étant sensiblement la ligne axiale joignant les centres de gravité des deux anneaux de renforcement de bourrelets.

Dans un pneumatique, avantageux pour la mise en oeuvre de l'invention, la pointe du bourrelet, destiné à être monté sur le premier siège de jante, peut être tronquée, ou autrement dit, le siège ou base du bourrelet sera réuni au bourrelet du côté pointe par un segment de droite incliné par rapport à une parallèle à l'axe de rotation d'un angle, ouvert radialement et axialement vers l'extérieur, inférieur à 90°, et de préférence égal à 45° ± 5°, la pointe de bourrelet étant axialement à l'extérieur du pneumatique, alors que le talon de bourrelet est à l'intérieur. Ce dernier peut aussi être avantageusement tronqué.

Si les deux sièges de jante sont inclinés vers l'extérieur, les pointes et talons des deux bourrelets seront préférentiellement tronqués.

Du côté talon, la portion correspondante de la jante de montage peut avoir la forme d'un arc de cercle réunissant le siège tronconique au rebord; la saillie extérieure peut présenter une face inclinée de 45° ± 5° par rapport à l'axe de rotation pour recevoir la pointe tronquée du bourrelet.

Les bourrelets sont montés sur la jante et en particulier sur les sièges tronconiques de jante avec un certain serrage. Ce serrage est défini, dans le cas de l'ensemble considéré, comme étant le rapport entre le diamètre minimum $D_M$ du siège de jante et le diamètre minimum $D_I$ du siège de bourrelet. Ce serrage sera préférentiellement au moins égal à 1,003 tout en restant inférieur à 1,02.

Il faut entendre par appui de soutien inextensible circonférentiellement un appui présentant sous effort de tension un allongement circonférentiel relatif au plus égal à 0,5%.

En outre, une bonne efficacité de l'ensemble conforme à l'invention est obtenue pour des hauteurs d'appui de soutien élevées, préférentiellement supérieures à 40 % de la hauteur de l'armature de carcasse.

Cette particularité offre l'avantage de prolonger le roulage à plat, c'est-à-dire à pression de gonflage nulle, sans provoquer, dans le cas d'une structure usuelle des flancs du pneumatique, des déchéances au niveau de ceux-ci, de l'armature de carcasse et même de l'armature de sommet.

L'appui de soutien annulaire est aisément enfilable du fait des caractéristiques particulières de la jante de montage et si l'on choisit son diamètre intérieur minimum, au moins égal au diamètre minimum D de la portée de jante, et au plus supérieur de 2 mm audit diamètre, sa génératrice intérieure étant parallèle à la génératrice de la portée.

L'appui de soutien, ovalisable et inextensible circonférentiellement, est préférentiellement constitué de vulcanisat caoutchouteux sous forme annulaire, ledit vulcanisat étant renforcé par des armatures de fils ou câbles disposés circonférentiellement, à 2° près. Une telle constitution permet une manipulation aisée, tout en assurant l'inextensibilité dans toutes les conditions de roulage et en particulier sous l'effet des forces centrifuges dues à la grande vitesse.

Outre que l'ensemble, conforme à l'invention, résout le problème de décoincement des bourrelets tout en minimisant les problèmes de montage des pneumatiques dans tous les cas qui se présentent usuellement, la structure particulière du pneumatique et plus particulièrement des bourrelets du pneumatique offre d'autres avantages.

En effet, si l'ovalisation des bourrelets d'un pneumatique est une opération nécessaire pour le montage dudit pneumatique et bien que la constitution de certains anneaux de renforcement de bourrelets, en particulier les tringles de type "tressé", permettent une ovalisation facile, cette manipulation ne doit pas dépasser certaines limites. En particulier, une ovalisation trop poussée, ce qui est le cas dans l'art antérieur décrit, affecte fortement la rigidité d'une tringle, que ce soit sous effort de traction, de flexion sur chant, de flexion dans son plan, ce qui se traduit dans certains cas du pneumatique en roulage par des propriétés d'antidécoincement, d'étanchéité, d'endurance à la fatigue des bourrelets et de résistance à l'éclatement dégradées. Ces propriétés sont conservées par l'invention.

Que ce soit dans le cas d'un ensemble symétrique ou d'un ensemble dissymétrique en diamètres, il est intéressant de prévoir que l'appui de soutien servira de butée ou de rebord au moins pour le bourrelet extérieur du pneumatique monté sur véhicule, ledit bourrelet étant naturellement le plus apte à décoincer, et le côté extérieur du pneumatique monté étant le plus affecté par les dégradations dans le cas de roulage à pression nulle ou faible et à forte dérive.

L'invention sera mieux comprise à l'aide du dessin annexé à la description, illustrant des exemples non limitatifs d'exécution d'un pneumatique 185/33-16, monté sur une jante de diamètre égal à 406,4 mm, dessin sur lequel

- la figure 1 montre une coupe méridienne du pneumatique d'un ensemble conforme à l'invention,

- la figure 2 montre une coupe méridienne de la jante de montage de l'ensemble, sur laquelle est monté un appui de soutien conforme à l'invention,

- la figure 3 montre une coupe méridienne d'une variante de l'ensemble portant sur la dissymétrie existante entre les diamètres des saillies de la jante de montage,

- les figures 4A à 4E montrent très schématiquement le principe de montage du pneumatique et de l'appui de soutien sur la jante de montage.

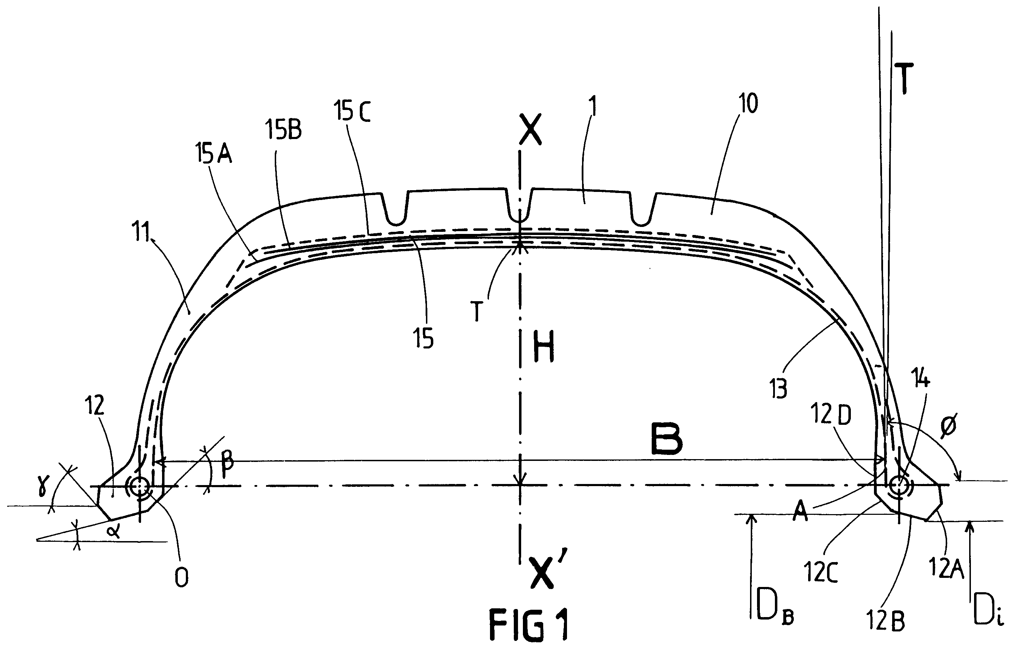

Sur la figure 1, le pneumatique (1) comprend une bande de roulement (10) réunie, au moyen de deux flancs (11), à deux bourrelets (12). Il est renforcé par une armature de carcasse radiale (13) formée d'une seule nappe de câbles textiles ancrée dans chaque bourrelet (12) par retournement autour d'une tringle (14) qui est, dans l'exemple montré, une tringle de type "tressé". L'armature de carcasse (13) est surmontée radialement d'une armature de sommet (15) composée d'une part de deux nappes superposées (15A) et (15B) de câbles métalliques croisés d'une nappe à la suivante en faisant avec la direction circonférentielle un angle de 22°, et d'autre part, disposée radialement à l'extérieur de ladite armature métallique d'une nappe (15C) de câbles textiles disposés circonférentiellement ou sensiblement circonférentiellement, c'est-à-dire dans l'intervalle + 2°, - 2°.

Le pneumatique (1) a un rapport de forme préférentiellement inférieur à 0,4 et plus précisément égal à 0,33 dans l'exemple décrit. Il faut entendre par rapport de forme le rapport H/B de l'armature de carcasse, H étant la hauteur de l'armature de carcasse (13) et B sa largeur axiale maximale. La hauteur H est la distance radiale séparant le point T de l'armature de carcasse le plus éloigné de l'axe de rotation de la ligne axiale réunissant axialement les centres de gravité O des sections de tringles (14); elle est égale à 62 mm. La largeur axiale maximale B est égale à 185 mm, et est mesurée sur une ligne axiale qui est radialement très proche de la ligne axiale réunissant les deux tringles (14). En effet, l'armature de carcasse (13) est tangente à la tringle (14) en un point A, par lequel passe une droite parallèle à l'axe de rotation de l'ensemble conforme à l'invention. En ce point A, la tangente AT au profil méridien de l'armature de carcasse (13) fait avec la droite parallèle ci-dessus un angle $\phi$ ouvert vers l'extérieur de 85°.

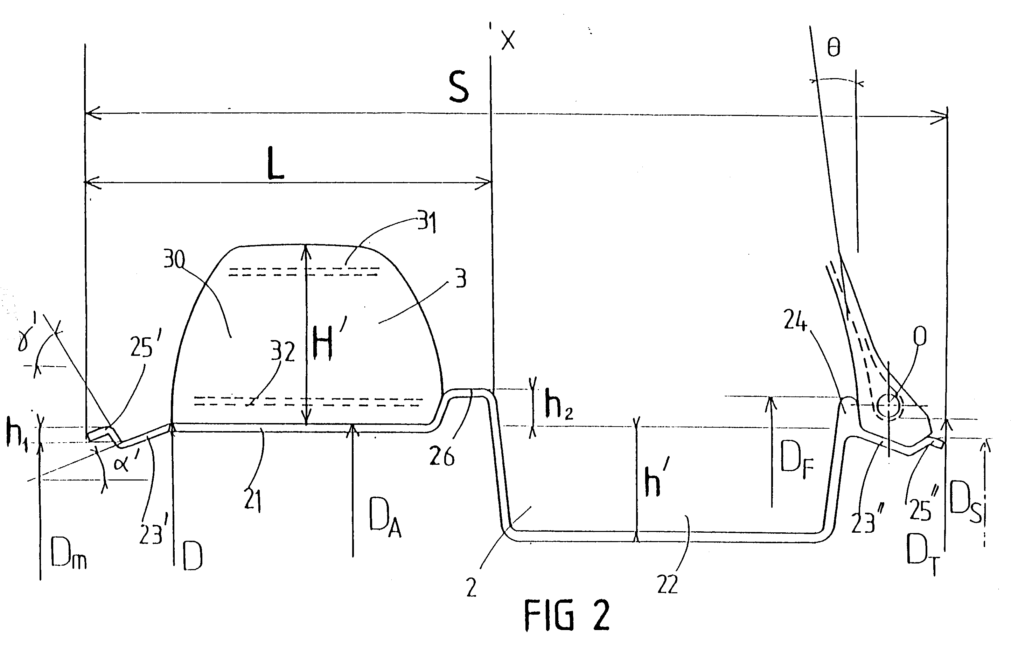

Chaque bourrelet (12), de largeur axiale comparable aux largeurs connues et usuelles de bourrelets, présente un contour extérieur formé principalement d'une pointe de bourrelet dont la face externe (12A) fait avec l'axe de rotation un angle $\gamma$, ouvert radialement et axialement vers l'extérieur de 45° ± 5°, cette face (12A) étant prolongée axialement à l'intérieur par un siège de bourrelet à base tronconique (12B) faisant avec l'axe de rotation un angle $\alpha$, ouvert axialement vers l'intérieur et radialement vers l'extérieur, compris entre 10° et 45° et supérieur à l'angle $\alpha'$, qui est l'angle du siège de jante (23) (figure 2), d'une quantité comprise entre 6° et 15°, et dont le diamètre $D_I$ minimum, mesuré dans un plan parallèle au plan équatorial XX', est égal à 394 mm.

Le siège (12B) est prolongé axialement à l'intérieur par une génératrice tronconique (12C) correspondant au talon du bourrelet, faisant avec l'axe de rotation un angle $\beta$ ouvert axialement vers l'intérieur et radialement vers l'extérieur, de 45° ± 5° et étant prolongé à l'intérieur par une paroi (12D) sensiblement perpendiculaire à l'axe de rotation.

La jante (2), de largeur axiale S (figure 2) mesurée entre ses extrémités axialement les plus éloignées du plan équatorial XX', est formée, en allant d'un bord à l'autre, d'une saillie ou hump (25') dont la face intérieure fait avec l'axe de rotation un angle $\gamma'$, égal à l'angle $\gamma$ de la pointe du bourrelet (12) du pneumatique (1), dont le diamètre $D_S$, égal à 402 mm, est inférieur au diamètre intérieur $D_T$ de la tringle (14) de renforcement, et dont la hauteur $h_1$, mesurée par rapport à l'extrémité axialement extérieure du siège de jante (23) est au plus égale à 1,25 % du diamètre nominal D, ledit diamètre D étant le diamètre des extrémités axialement intérieures des sièges de jante (23) est égal à 406,4 mm.

Les sièges de jante (23', 23") ont des formes tronconiques dont les génératrices font avec l'axe de rotation un angle $\alpha'$, ouverts vers l'intérieur du pneumatique, compris entre 4° et 30° et dans l'exemple décrit égal à 14°, donc inférieur de 8° à l'angle $\alpha$ des génératrices correspondantes des sièges des bourrelets (12) du pneumatique, égal à 22°. Sur l'un des côtés de l'ensemble, le siège (23") est relié à la paroi axialement extérieure du rebord de jante (24), paroi faisant avec une perpendiculaire à l'axe de rotation un angle $\theta$ faible de 5°, et dont le diamètre $D_F$ maximal est de 432 mm, et supérieur au diamètre D. De l'autre côté par rapport au plan équatorial XX', le siège de jante (23') est directement relié à une portée cylindrique (21), sur laquelle viendra reposer l'appui de soutien (3). Cette portée (21) est munie axialement à l'intérieur d'une saillie (26) de positionnement transversal de l'appui (3). La hauteur $h_2$ de cette saillie, au plus égale à 1,5 % du diamètre nominal D de la jante (2), est, dans l'exemple, égale à 5 mm. La distance axiale L, mesurée entre l'extrémité de la saillie (25) et la face intérieure de la saillie (26), est égale à 103 mm, quantité qui est inférieure à la moitié de la largeur S de la jante (2) égale à 215 mm.

Les faces axialement intérieures, respectivement de la saillie de positionnement (26) et du rebord de jante (24), définissent axialement la gorge de montage (22), dont la profondeur h' est de 50 mm, cette hauteur h' étant mesurée radialement à partir de la ligne axiale définissant le diamètre nominal D de la jante.

Quant à l'appui (3) annulaire, sa section méridienne a une forme voisine d'un rectangle dont le côté radialement intérieur est rectiligne, alors que les côtés latéraux et le côté radialement extérieur peuvent être légèrement courbes. La différence H' entre son rayon intérieur et son rayon extérieur est égale à 31 mm, ce qui représente 50 % de la hauteur H du pneumatique (1).

Il est constitué d'un vulcanisat de caoutchouc (30) renforcé respectivement radialement à l'intérieur et radialement à l'extérieur par deux armatures (31) et (32) constituées chacune de deux couches de câbles textiles orientés circonférentiellement à plus ou moins 2°.

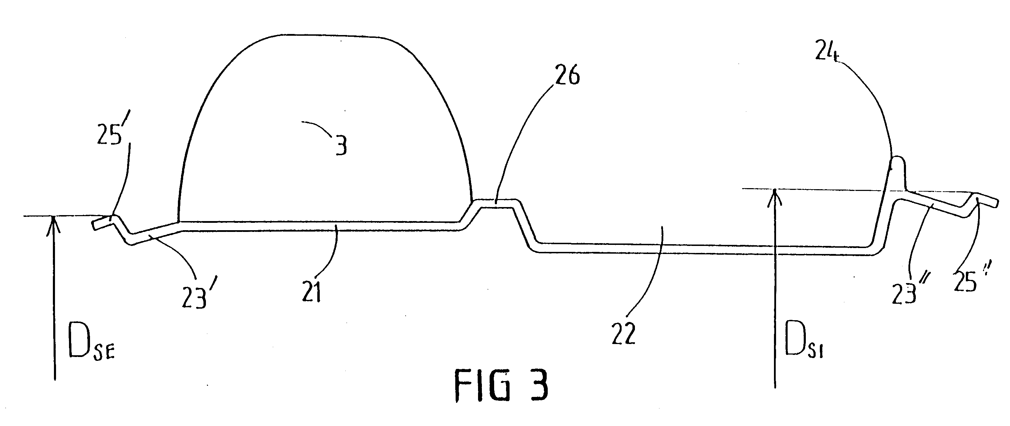

La variante, conforme à l'invention et montrée sur la figure 3, ne diffère de celle montrée à la figure 2 que par la dissymétrie dans les diamètres respectifs des saillies (25', 25''), des sièges de jante (23', 23'') et des sièges de bourrelets correspondants.

Une des saillies (25'') possède un diamètre $D_{SI}$ supérieur d'une quantité $\Delta S$ au diamètre $D_{SE}$ de la saillie opposée (25') de la jante de montage. La quantité $\Delta S$, égale à 16 mm, c'est-à-dire à 4 % du diamètre $D_{SE}$, est faible, mais permet néanmoins de pouvoir réduire la hauteur h' de la gorge de montage de 35 mm, comparativement à la hauteur h' correspondant au cas des jante et pneumatique symétriques, hauteur h' mesurée par rapport à la génératrice cylindrique de diamètre D, diamètre nominal de la jante et diamètre de la portée cylindrique (21) adjacente axialement à l'extérieur au siège tronconique (23') pourvu de la saillie (25') de plus petit diamètre $D_{SE}$.

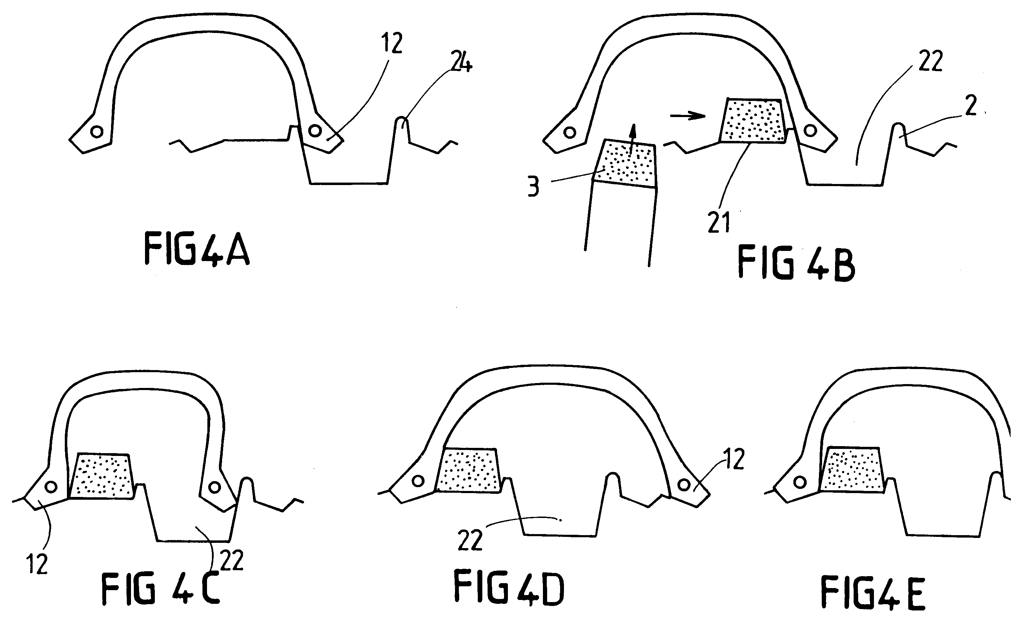

La méthode de montage, schématisée sur les figures 4A à 4E, se décompose, pour l'exemple décrit, selon les étapes suivantes :

a) on monte le premier bourrelet (12) par le côté opposé au côté ayant le rebord de jante (24) pour parvenir au schéma de la figure 4A;

b) en ramenant ledit premier bourrelet près de la face intérieure de la gorge de montage (22), on introduit l'appui (3) ovalisé puis on l'enfile sur la portée cylindrique (21) de la jante (2) (figure 4B),

c) on monte ensuite le deuxième bourrelet (12), le premier bourrelet étant alors dans la gorge de montage (22) (figure 4C),

d) on termine le montage en sortant le premier bourrelet (12) de la gorge de montage (22) vers l'extérieur de la jante (figure 4D),

e) puis en plaçant ledit bourrelet sur le siège de jante correspondant pour parvenir à l'ensemble constitué conformément à l'invention (figure 4E).

## Revendications

1. Ensemble roulant comprenant au moins un pneumatique (1) à armature de carcasse radiale (13) ancrée dans chaque bourrelet (12) à un anneau de renforcement (14), et une jante (2), délimitée axialement par un premier bord et un deuxième bord de jante, et munie d'un premier siège et d'un deuxième siège de jante (23', 23''), caractérisé en ce que, vu en section méridienne,

a) au moins le premier siège de jante (23') a une génératrice telle que l'extrémité axialement extérieure de ladite génératrice est distante de l'axe de rotation d'une quantité inférieure à la distance séparant son extrémité axialement intérieure, et est délimité axialement à l'extérieur par une saillie ou hump (25'), et
b) le pneumatique (1), monté sur jante et gonflé à sa pression de service, est doté d'une armature de carcasse radiale (13) possédant un profil méridien à sens de courbure constant, au moins dans le flanc et le bourrelet situés du même côté de l'ensemble que le premier siège de jante.

2. Ensemble selon la revendication 1, caractérisé en ce que la jante (2) comprend au moins un rebord de jante (24) adjacent axialement à l'un des sièges de jante (23', 23''), le diamètre maximal $D_F$ dudit rebord étant supérieur au diamètre $D_S$, $D_{SE}$, $D_{SI}$, de toute partie de la jante comprise entre ledit rebord et le bord de la jante axialement le plus proche dudit rebord (24).

3. Ensemble selon la revendication 2, caractérisé en ce que la jante (2) comprend au moins une gorge de montage (22), qui prolonge axialement à l'intérieur le rebord de jante (24).

4. Ensemble selon l'une des revendications 1 à 3, caractérisé en ce que, vu en section méridienne, le sièges de jante (23', 23'') ont des diamètres différents.

5. Ensemble roulant comprenant un pneumatique (1) à armature de carcasse radiale (13) ancrée dans chaque bourrelet (12) à un anneau de renforcement (14), une jante (2), délimitée axialement par un premier bord et un deuxième bord de jante, et munie d'un premier siège et d'un deuxième siège de jante (23', 23''), et un appui de soutien (3) de bande de roulement, caractérisé en ce que, vu en section méridienne,

a) au moins le premier siège de jante (23') a une génératrice telle que l'extrémité axialement extérieure de ladite génératrice est distante de l'axe de rotation d'une quantité inférieure à la distance séparant son extrémité axialement intérieure, ladite jante (2) comprenant au moins une portée (21), destinée à recevoir un appui de soutien (3) de bande de roulement, disposée entre les extrémités axialement intérieures des deux sièges (23', 23'') et ayant une génératrice dont le diamètre minimum, qui est le diamètre de l'une de ses extrémités, est au moins égal au diamètre de toute partie de jante comprise axialement entre ladite extrémité et le bord de jante correspondant au siège de jante le plus proche axialement de ladite extrémité, et en ce que

b) le pneumatique (1), monté sur jante et gonflé à sa pression de service, est doté d'une armature de carcasse radiale (13) possédant un profil méridien à sens de courbure constant, au moins dans le flanc et le bourrelet situés du même côté de l'ensemble que le premier siège de jante, et en ce que

c) l'appui de soutien annulaire (3) est ovalisable, de préférence inextensible circonférentiellement, et enfilable sur la portée de jante (21).

6. Ensemble selon la revendication 5, caractérisé en ce que la jante (2) est munie d'au moins une gorge de montage (22), axialement située entre un des sièges de jante (23', 23") et la portée (21) destinée à recevoir l'appui de soutien (3).

7. Ensemble selon l'une des revendications 5 ou 6, caractérisé en ce qu'au moins le premier siège de jante (23') est délimité axialement à l'extérieur par une saillie ou hump (25') de diamètre $D_S$, $D_{SE}$, $D_{SI}$.

8. Ensemble selon l'une des revendications 5 à 7, caractérisé en ce que la jante (2) comprend au moins un rebord de jante (24) adjacent axialement à l'un des sièges de jante (23', 23"), le diamètre maximal $D_F$ dudit rebord étant supérieur au diamètre de toute partie de la jante comprise entre ledit rebord et le bord de la jante axialement le plus proche dudit rebord (24).

9. Ensemble selon la revendication 8, caractérisé en ce que la portée (21) est adjacente axialement à l'intérieur à l'un des sièges de jante (23', 23"), la gorge de montage (22) étant située axialement entre ladite portée (21) et le rebord de jante (24), et l'appui de soutien (3) servant de butée axiale au bourrelet de pneumatique qui lui est adjacent.

10. Ensemble roulant selon la revendication 9, caractérisé en ce que la portée (21) est axialement adjacente intérieurement au premier siège de jante (23'), le rebord de jante (24) prolongeant axialement à l'intérieur le deuxième siège de jante (23"), ledit rebord (24) étant lui-même prolongé axialement à l'intérieur par la gorge de montage (22).

11. Ensemble selon l'une des revendications 5 à 10, caractérisé en ce que, vu en section méridienne les sièges (23', 23") ont des diamètres différents, la portée (21) destinée à recevoir l'anneau de soutien (3) étant axialement adjacente intérieurement au siège (23') de plus petit diamètre.

12. Ensemble selon une des revendications 4 ou 11, caractérisé en ce que le premier siège de jante (23') est le siège de plus petit diamètre.

13. Ensemble selon la revendication 12, caractérisé en ce que le rebord de jante (24) prolonge axialement à l'intérieur le siège de jante (23") de plus grand diamètre.

14. Ensemble selon l'une des revendications 1 à 13, caractérisé en ce que le deuxième siège de jante (23") a une génératrice telle que l'extrémité axialement extérieure de ladite génératrice soit distante de l'axe de rotation d'une quantité inférieure à la distance séparant son extrémité axialement intérieure, ledit siège étant prolongé axialement à l'extérieur par une saillie ou hump (25"), et en ce que le pneumatique (1), monté sur jante et gonflé à sa pression de service, est doté d'une armature de carcasse radiale (13) possédant un profil méridien à sens de courbure constant sur toute sa longueur.

15. Ensemble selon l'une des revendications 1 à 14, caractérisé en ce que les sièges de jante (23', 23") ont des génératrices tronconiques faisant avec l'axe de rotation un angle $\alpha'$ compris entre 4° et 30°, inférieur à l'angle $\alpha$ que font les bases tronconiques (12B) des sièges de bourrelets (12) du pneumatique (1) avec ledit axe de rotation.

16. Ensemble selon l'une des revendications 1 à 15, caractérisé en ce que les saillies (25', 25") ont des parois axialement intérieures tronconiques, faisant avec l'axe de rotation un angle $\gamma'$, compris entre 40° et 50°, et égal à l'angle $\gamma$ que font les faces externes (12A) des pointes de bourrelets (12) du pneumatique (1).

17. Ensemble selon l'une des revendications 5 à 16, caractérisé en ce que la portée (21) a une génératrice cylindrique de diamètre D, égal au diamètre nominal de la jante.

18. Ensemble selon la revendication 17, caractérisé en ce que la portion (21) comprend sur son bord axialement intérieur une saillie de positionnement (26), ladite saillie servant, à l'intérieur, de butée à l'anneau de soutien (3) et délimitant, avec le rebord (24), la gorge de montage (22).

19. Ensemble selon la revendication 18, caractérisé en ce que la largeur axiale L comprise entre la saillie de positionnement (26) et le bord de jante axialement extérieur correspondant au siège (23, 23') réuni à la portée (21), est avantageusement au plus égale à la moitié de la largeur maximale S de la jante.

20. Ensemble selon l'une des revendications 1 à 4, 7 à 19, caractérisé en ce que la hauteur $h_1$ des saillies axialement extérieures est avantageusement au plus égale à 1,25% du diamètre nominal de la jante de montage.

21. Ensemble selon l'une des revendications 1 à 20, caractérisé en ce que le pneumatique est doté d'une armature de carcasse (13) possédant un profil méridien, lorsque le pneumatique est monté sur sa jante de service (2) et gonflé à sa pression de service, qui est, au moins dans le bourrelet destiné à être monté sur le premier siège de jante, tel que, la tangente AT au point de tangence A dudit profil avec la tringle (14) dudit bourrelet (12) fait avec l'axe de rotation un angle $\phi$ ouvert vers l'extérieur d'au moins 70° et de préférence supérieur à 80°.

22. Ensemble selon l'une des revendications 5 à 20, caractérisé en ce que la hauteur H' de l'appui (3) est au moins égale à 40% de la hauteur H de l'armature de carcasse (13) du pneumatique (1), celui-ci ayant un rapport de forme H/B inférieur à 0,4.

23. Ensemble selon la revendication 22, caractérisé en ce que l'appui (3) est en vulcanisat caoutchouteux renforcé par des armatures (31), (32) d'au moins deux couches de câbles orientés circonférentiellement à plus ou moins 2° près.

24. Ensemble selon la revendication 22, caractérisé en ce que le diamètre intérieur minimum $D_A$ de l'appui (3) de soutien, au moins égal au diamètre D de la portée (21) de jante (1), est au plus supérieur de 2 mm audit diamètre, la génératrice intérieure dudit appui étant parallèle à la génératrice de la portée de jante (21).

25. Ensemble selon la revendication 13, caractérisé en ce que la différence $D_{SE} - D_{SI}$ entre les diamètres des saillies est, en valeur absolue, comprise entre 2,5% et 10% du diamètre $D_{SI}$ ($D_{SE}$) le plus petit, le côté de l'ensemble de plus faible diamètre est monté à l'extérieur du véhicule, par rapport à l'axe médian du véhicule.

26. Pneumatique (1), destiné à être monté sur une jante (2) ayant au moins un siège (23, 23"), dont la génératrice a une extrémité axialement extérieure plus proche de l'axe de rotation que l'extrémité axialement intérieure, et comprenant au moins deux bourrelets (12), au moins un desdits bourrelets étant terminé axialement à l'extérieur par une pointe, et destiné à être monté sur ledit siège, et une armature de carcasse radiale (13), ancrée dans chaque bourrelet (12) à au moins une tringle (14), caractérisé en ce que, vu en section méridienne, le profil méridien de l'armature de carcasse (13), lorsque le pneumatique est monté sur sa jante de service (2) et gonflé à sa pression de service, a un sens de courbure constant dans le flanc et le bourrelet terminés par la pointe et est tel que, dans ledit bourrelet, la tangente AT au point de tangence A dudit profil avec la tringle (14) dudit bourrelet (12) fait avec l'axe de rotation un angle $\phi$ ouvert vers l'extérieur d'au moins 70°, ledit bourrelet (12), de largeur axiale usuelle, présentant un siège de bourrelet dont la génératrice (12B) a son extrémité axialement extérieure plus proche de l'axe de rotation que son extrémité axialement intérieure, ladite génératrice (12B) étant prolongée axialement à l'extérieur par une face extérieure (12A) délimitant la pointe de bourrelet, ladite face (12A) faisant avec l'axe de rotation un angle $\gamma$, ouvert radialement et axialement vers l'extérieur, et inférieur à 90°.

27. Pneumatique selon la revendication 26, destiné à être monté sur une jante (2) dont les deux sièges (23', 23") ont des génératrices identiques, caractérisé en ce que le profil méridien de l'armature de carcasse (13) à sens de courbure constant est identique dans les deux bourrelets, lesdits bourrelets (12) de même largeur axiale présentant des sièges de bourrelet identiques dont les génératrices (12B) sont prolongées axialement à l'extérieur par des faces (12A) identiques.

28. Pneumatique selon l'une des revendications 26 ou 27, caractérisé en ce que l'(les) angle(s) $\phi$ est (sont) égal (égaux) à au moins 80°.

29. Pneumatique selon l'une des revendications 26 à 28, caractérisé en ce que la génératrice (12B) est formée d'au moins une partie tronconique faisant avec l'axe de rotation un angle $\alpha$ ouvert axialement vers l'intérieur et radialement vers l'extérieur compris entre 10° et 45°.

30. Pneumatique selon la revendication 29, caractérisé en ce que la génératrice (12B) est tronconique dans sa totalité.

31. Pneumatique selon l'une des revendications 26 à 29, caractérise en ce que l'angle $\gamma$ est compris entre 40° et 50°.

32. Pneumatique selon l'une des revendications 26 à 31, caractérisé en ce que la (les) génératrice(s) (12B) est (sont) prolongée(s) axialement à l'intérieur par une (des) génératrice(s) tronconique(s) (12C), correspondant au(x) talon(s) du (des) bourrelet(s) et faisant avec l'axe de rotation un angle $\beta$ ouvert axialement vers l'intérieur et radialement vers l'extérieur et compris entre 40° et 50°.

33. Pneumatique selon l'une des revendications 26 à 32, caractérisé en ce que chaque bourrelet (12) a un siège (12B) dont le diamètre minimum $D_I$ est tel que le serrage sur jante, défini comme étant le rapport $D_M/D_I$ entre le diamètre minimum $D_M$ du siège de jante (23) et le diamètre $D_I$, soit au moins égal à 1,003 tout en restant inférieur à 1,02.

34. Pneumatique selon l'une des revendications 26 à 33, caractérisé en ce que les sièges des bourrelets (12) ont des diamètres différents.

35. Jante (2), destinée au montage d'un pneumatique (1) comprenant deux bourrelets (12) renforcés, et délimitée axialement par deux bords de jante, distants axialement de la largeur S de jante, comprenant, vue en section méridienne et axialement à l'extérieur, un premier siège et un deuxième siège de jante (23',23"), au moins le premier siège de jante ayant une génératrice dont l'extrémité axialement extérieure est sur un cercle de diamètre inférieur au diamètre du cercle sur lequel se trouve l'extrémité axialement intérieure, ledit siège de jante (23') étant prolongé axialement à l'extérieur par une saillie ou hump.(25').

36. Jante (2) selon la revendication 35, caractérisée en ce qu'elle comprend au moins une gorge de montage (22), disposée entre les extrémités axialement intérieures des sièges de jante (23', 23").

37. Jante (2) selon l'une des revendications 35 ou 36, caractérisée en ce qu'elle comprend au moins un rebord de jante (24) prolongeant axialement à l'intérieur l'un des sièges de jante (23', 23").

38. Jante (2) selon l'une des revendications 35 à 37, caractérisée en ce qu'elle comprend au moins une portée (21) destinée à recevoir un appui de soutien annulaire (3), ladite portée étant disposée entre les extrémités axialement intérieures des deux sièges (23', 23") et ayant une génératrice dont le diamètre minimum D, qui est le diamètre de l'une de ses extrémités, au moins égal au diamètre de toute partie de jante comprise axialement entre ladite extrémité et le bord de jante correspondant au siège de jante le plus proche axialement de ladite extrémité.

39. Jante (2) selon l'une des revendications 35 à 38, caractérisée en ce que le deuxième siège de jante a une génératrice dont l'extrémité axialement extérieure est sur un cercle de diamètre inférieur au diamètre du cercle sur lequel se trouve l'extrémité axialement intérieure, ledit siège de jante (23") étant prolongé axialement à l'extérieur par une saillie ou hump (25").

40. Jante (2) selon la revendication 39, caractérisée en ce que la portée (21) est axialement adjacente à l'un de sièges de jante (23', 23"), le rebord de jante (24) étant adjacent axialement à l'intérieur à l'autre siège de jante (23', 23"), ledit rebord (24) étant prolongé par la gorge de montage (22), située entre ledit rebord (24) et ladite portée de jante (21).

41. Jante (2), destinée au montage d'un pneumatique (1) comprenant deux bourrelets (12) renforcés, et délimitée axialement par deux bords de jante, distants axialement de la largeur S de jante, comprenant, vue en section méridienne et axialement à l'extérieur, un premier siège et un deuxième siège de jante (23',23"), au moins le premier siège de jante ayant une génératrice dont l'extrémité axialement extérieure est sur un cercle de diamètre inférieur au diamètre du cercle sur lequel se trouve l'extrémité axialement intérieure, les deux sièges de jante (23', 23") ayant des diamètres de sièges différents.

42. Jante (2) selon la revendication 41, caractérisée en ce qu'est disposée, entre l'extrémité axialement extérieure du premier siège de jante (23') et le bord correspondant de jante, une saillie ou hump (25').

43. Jante (2) selon l'une des revendications 41 ou 42, caractérisée en ce qu'elle comprend au moins un rebord de jante (24) prolongeant axialement à l'intérieur l'un des sièges de jante (23', 23").

44. Jante (2) selon l'une des revendications 42 à 43, caractérisée en ce qu'elle comprend au moins une gorge de montage (22), disposée entre les extrémités axialement intérieures des sièges de jante (23', 23").

45. Jante (2) selon l'une des revendications 41 à 43, caractérisée en ce qu'elle comprend au moins une portée (21) destinée à recevoir un appui de soutien annulaire (3), ladite portée étant disposée entre les extrémités axialement intérieures des deux sièges (23', 23") et ayant une génératrice dont le diamètre minimum D, qui est le diamètre de l'une de ses extrémités, est au moins égal au diamètre de toute partie de jante comprise axialement entre ladite extrémité et le bord de jante correspondant au siège de jante le plus proche axialement de ladite extrémité.

46. Jante (2) selon la revendication 45, caractérisée en ce qu'elle comprend au moins une gorge de montage (22), disposée entre les extrémités axialement intérieures des sièges de jante (23', 23").

47. Jante (2) selon la revendication 46, caractérisée en ce que la portée (21) prolonge axialement à l'intérieur le siège de jante (23') de plus petit diamètre et que la gorge de montage (22') est intercalée entre la portée (21) et le siège de jante (23") de plus grand diamètre.

48. Jante (2) selon l'une des revendications 41 à 47, caractérisée en ce que le deuxième siège de jante a une génératrice dont l'extrémité axialement extérieure est sur un cercle de diamètre inférieur au diamètre du cercle sur lequel se trouve l'extrémité axialement intérieure, ledit siège de jante étant prolongé axialement à l'extérieur par une saillie ou hump.

49. Jante (2) selon l'une des revendications 38 à 40, caractérisée en ce que la portée (21), destinée à recevoir un appui de soutien (3), a une génératrice qui prolonge axialement à l'intérieur le siège de jante dont l'extrémité axialement intérieure est sur le cercle de diamètre nominal de la jante.

50. Ensemble comportant une jante (2) selon l'une des revendications 38 à 40, 45 à 48 et un anneau de soutien de bande de roulement (3).

51. Ensemble selon la revendication 50, caractérisé en ce qu'au moins une des parois latérales de l'anneau de soutien (3) sert de butée latérale à un des bourrelets (12) du pneumatique (1) destiné à être monté sur le siège correspondant de la jante (2).

52. Ensemble selon la revendication 51, caractérisé en ce que la deuxième paroi latérale de l'anneau de soutien (3) est maintenue latéralement par une saillie de positionnement (26) prolongeant axialement à l'intérieur la portée de jante (21).

**Claims**

1. A rolling assembly comprising at least one tyre (1) with radial carcass reinforcement (13) anchored in each bead (12) to a reinforcement ring (14), and a rim (2), delimited axially by a first rim edge and a second rim edge and provided with a first rim seat and a second rim seat (23', 23"), characterised in that, viewed in meridian section,

    a) at least the first rim seat (23') has a generatrix such that the axially outer end of said generatrix is spaced from the axis of rotation by an amount less than the distance from its axially inner end and is delimited axially towards the outside by a protrusion or hump (25'), and

    b) the tyre (1), mounted on the rim and inflated to its service pressure, is provided with a radial carcass reinforcement (13) having a meridian profile of constant direction of curvature, at least in the sidewall and the bead which are located on the same side of the assembly as the first rim seat.

2. An assembly according to Claim 1, characterised in that the rim (2) comprises at least one rim flange (24) axially adjacent to one of the rim seats (23', 23"), the maximum diameter $D_F$ of said flange being greater than the diameter $D_S$, $D_{SE}$, $D_{SI}$, of any part of the rim contained between said flange and the edge of the rim axially closest to said flange (24).

3. An assembly according to Claim 2, characterised in that the rim (2) comprises at least one mounting groove (22) which axially extends the rim flange (24) on the inside.

4. An assembly according to one of Claims 1 to 3, characterised in that, viewed in meridian section, the rim seats (23', 23") have different diameters.

5. A rolling assembly comprising a tyre (1) with radial carcass reinforcement (13) anchored in each bead (12) to a reinforcement ring (14), a rim (2), delimited axially by a first rim edge and a second rim edge and provided with a first rim seat and a second rim seat (23', 23"), and a supporting prop (3) for the tread, characterised in that, viewed in meridian section,

    a) at least the first rim seat (23') has a generatrix such that the axially outer end of said generatrix is spaced from the axis of rotation by an amount less than the distance from its axially inner end, said rim (2) comprising at least one bearing surface (21) intended to receive a tread supporting prop (3), which bearing surface is arranged between the axially inner ends of the two seats (23', 23") and having a generatrix the minimum diameter of which, which is the diameter of one of its ends, is at least equal to the diameter of any part of the rim contained axially between said end and the rim edge corresponding to the rim seat closest axially to said end, and in that

    b) the tyre (1), mounted on the rim and inflated to its service pressure, is provided with a radial carcass reinforcement (13) having a meridian profile of constant direction of curvature, at least in the sidewall and the bead which are located on the same side of the assembly as the first rim seat, and in that

    c) the annular supporting prop (3) is ovalisable, preferably circumferentially unstretchable, and can be placed on the rim bearing surface (21).

6. An assembly according to Claim 5, characterised in that the rim (2) is provided with at least one mounting groove (22) which is located axially between one of the rim seats (23', 23") and the bearing surface (21) intended to receive the supporting prop (3).

7. An assembly according to one of Claims 5 or 6, characterised in that at least the first rim seat (23') is delimited axially towards the outside by a protrusion or hump (25') of diameter $D_S$, $D_{SE}$, $D_{SI}$.

8. An assembly according to one of Claims 5 to 7, characterised in that the rim (2) comprises at least one rim flange (24) axially adjacent to one of the rim seats (23', 23"), the maximum diameter $D_F$ of said flange being greater than the diameter of any part of the rim contained between said flange and the edge of the rim axially closest to said flange (24).

9. An assembly according to Claim 8, characterised in that the bearing surface (21) is axially adjacent on the inside to one of the rim seats (23', 23"), the mounting groove (22) being located axially between said bearing surface (21) and the rim flange (24), and the supporting prop (3) serving as an axial stop for the tyre bead which is adjacent thereto.

10. A rolling assembly according to Claim 9, characterised in that the bearing surface (21) is axially adjacent towards the inside to the first rim seat (23'), the rim flange (24) axially extending the second rim seat (23") towards the inside, said flange (24) being, in its turn, extended axially towards the inside by the mounting groove (22).

11. An assembly according to one of Claims 5 to 10, characterised in that, viewed in meridian section, the seats (23', 23") have different diameters, the bearing surface (21) intended to receive the supporting ring (3) being axially adjacent on the inside to the seat (23') of smaller diameter.

12. An assembly according to one of Claims 4 or 11, characterised in that the first rim seat (23') is the seat of smaller diameter.

13. An assembly according to Claim 12, characterised in that the rim flange (24) axially extends the rim seat (23") of larger diameter towards the inside.

14. An assembly according to one of Claims 1 to 13, characterised in that the second rim seat (23") has a generatrix such that the axially outer end of said generatrix is spaced from the axis of rotation by an amount less than the distance from its axially inner end, said seat being extended axially to the outside by a protrusion or hump (25"), and in that the tyre (1), mounted on the rim and inflated to its service pressure, is provided with a radial carcass reinforcement (13) having a meridian profile of constant direction of curvature over its entire length.

15. An assembly according to one of Claims 1 to 14, characterised in that the rim seats (23', 23") have frustoconical generatrices which form with the axis of rotation an angle $\alpha'$ of between 4° and 30°, less than the angle $\alpha$ which the frustoconical bases (12B) of the bead seats (12) of the tyre (1) form with said axis of rotation.

16. An assembly according to one of Claims 1 to 15, characterised in that the humps (25', 25") have frustoconical axially inner walls which form with the axis of rotation an angle $\gamma'$ of between 40° and 50° and equal to the angle $\gamma$ formed by the outer faces (12A) of the bead toes (12) of the tyre (1).

17. An assembly according to one of Claims 5 to 16, characterised in that the bearing surface (21) has a cylindrical generatrix of diameter D equal to the nominal diameter of the rim.

18. An assembly according to Claim 17, characterised in that the portion (21) comprises on its axially inner edge a positioning hump (26), said hump serving, on the inside, as stop for the supporting ring (3) and delimiting, with the flange (24), the mounting groove (22).

19. An assembly according to Claim 18, characterised in that the axial width L contained between the positioning hump (26) and the axially outer rim edge corresponding to the seat (23, 23') connected to the bearing surface (21) is advantageously at most equal to one half of the maximum width S of the rim.

20. An assembly according to one of Claims 1 to 4, 7 to 19, characterised in that the height $h_1$ of the axially outer humps is advantageously at most equal to 1.25% of the nominal diameter of the mounting rim.

21. An assembly according to one of Claims 1 to 20, characterised in that the tyre is provided with a carcass reinforcement (13) having a meridian profile, when the tyre is mounted on its service rim (2) and inflated to its service pressure, which, at least in the bead intended to be mounted on the first rim seat, is such that the tangent AT to the point of tangency A of said profile with the bead wire (14) of said bead (12) forms, with the axis of rotation, an angle $\phi$, open towards the outside, of at least 70° and preferably more than 80°.

22. An assembly according to one of Claims 5 to 20, characterised in that the height H' of the prop (3) is at least equal to 40% of the height H of the carcass reinforcement (13) of the tyre (1), the latter having a form ratio H/B less than 0.4.

23. An assembly according to Claim 22, characterised in that the prop (3) is a rubber vulcanisate reinforced by reinforcements (31), (32) of at least two layers of cables oriented circumferentially, plus or minus 2°.

**24.** An assembly according to Claim 22, characterised in that the minimum inside diameter $D_A$ of the supporting prop (3), at least equal to the diameter D of the bearing surface (21) of rim (1), is at most 2 mm greater than said diameter, the inner generatrix of said prop being parallel to the generatrix of the rim bearing surface (21).

**25.** An assembly according to Claim 13, characterised in that the difference $D_{SE}$ - $D_{SI}$ between the diameters of the humps is, in absolute value, between 2.5% and 10% of the smaller diameter $D_{SI}$ ($D_{SE}$), the side of the assembly of smaller diameter is mounted on the outside of the vehicle with respect to the median axis of the vehicle.

**26.** A tyre (1) intended to be mounted on a rim (2) having at least one seat (23, 23") the generatrix of which has an axially outer end closer to the axis of rotation than the axially inner end and comprising at least two beads (12), at least one of said beads being terminated axially on the outside by a toe and intended to be mounted on said seat, and a radial carcass reinforcement (13), anchored in each bead (12) to at least one bead wire (14), characterised in that, viewed in meridian section, the meridian profile of the carcass reinforcement (13), when the tyre is mounted on its service rim (2) and inflated to its service pressure, has a constant direction of curvature in the sidewall and the bead which are terminated by the toe and is such that, in said bead, the tangent AT to the point of tangency A of said profile with the bead wire (14) of said bead (12) forms with the axis of rotation an angle $\phi$, open towards the outside, of at least 70°, said bead (12), of customary axial width, having a bead seat the generatrix (12B) of which has its axially outer end closer to the axis of rotation than its axially inner end, said generatrix (12B) being extended axially to the outside by an outer face (12A) delimiting the bead toe, said face (12A) forming with the axis of rotation an angle $\gamma$, open radially and axially towards the outside, of less than 90°.

**27.** A tyre according to Claim 26, intended to be mounted on a rim (2) having two seats (23', 23") the generatrices of which are identical, characterised in that the meridian profile of the carcass reinforcement (13) having a constant direction of curvature is identical in the two beads, said beads (12) of the same axial width having identical bead seats, the generatrices (12B) of which are extended axially to the outside by identical faces (12A).

**28.** A tyre according to one of Claims 26 or 27, characterised in that the angle(s) $\phi$ is (are) equal to at least 80°.

**29.** A tyre according to one of Claims 26 to 28, characterised in that the generatrix (12B) is formed of at least one frustoconical portion forming with the axis of rotation an angle $\alpha$, open axially towards the inside and radially towards the outside, of between 10° and 45°.

**30.** A tyre according to Claim 29, characterised in that the generatrix (12B) is frustoconical in its entirety.

**31.** A tyre according to one of Claims 26 to 29, characterised in that the angle $\gamma$ is between 40° and 50°.

**32.** A tyre according to one of Claims 26 to 31, characterised in that the generatrix or generatrices (12B) is (are) extended axially towards the inside by (a) frustoconical generatrix or generatrices (12C), corresponding to the heel(s) of the bead(s) and forming with the axis of rotation an angle $\beta$, open axially towards the inside and radially towards the outside, of between 40° and 50°.

**33.** A tyre according to one of Claims 26 to 32, characterised in that each bead (12) has a seat (12B) the minimum diameter $D_I$ of which is such that the clamping on the rim, defined as being the ratio $D_M/D_I$ between the minimum diameter $D_M$ of the rim seat (23) and the diameter $D_I$, is at least equal to 1.003 while being less than 1.02.

**34.** A tyre according to one of Claims 26 to 33, characterised in that the seats of the beads (12) have different diameters.

**35.** A rim (2) intended for the mounting of a tyre (1) comprising two reinforced beads (12) and delimited axially by two rim edges, spaced axially by the rim width S, comprising, viewed in meridian section and axially towards the outside, a first rim seat and a second rim seat (23', 23"), at least the first rim seat having a generatrix the axially outer end of which is on a circle of a diameter less than the diameter of the circle on which the axially inner end is located, said rim seat (23') being extended axially towards the outside by a protrusion or hump (25').

**36.** A rim (2) according to Claim 35, characterised in that it comprises at least one mounting groove (22) disposed between the axially inner ends of the rim seats (23', 23").

**37.** A rim (2) according to one of Claims 35 or 36, characterised in that it comprises at least one rim flange (24) which extends one of the rim seats (23', 23") axially to the inside.

**38.** A rim (2) according to one of Claims 35 to 37, characterised in that it comprises at least one bearing surface (21) intended to receive an annular supporting prop (3), said bearing surface being arranged between the axially inner ends of the two seats (23', 23") and having a generatrix the minimum diameter D of which, which is the diameter of one of its ends, is at least equal to the diameter of any part of the rim contained axially between said end and the rim edge corresponding to the rim seat closest axially to said end.

39. A rim (2) according to one of Claims 35 to 38, characterised in that the second rim seat has a generatrix the axially outer end of which lies on a circle of a diameter less than the diameter of the axially inner end is located, said rim seat (23") being extended axially towards the outside by a protrusion or hump (25").

40. A rim (2) according to Claim 39, characterised in that the bearing surface (21) is axially adjacent to one of the rim seats (23', 23"), the rim flange (24) being axially adjacent on the inside to the other rim seat (23', 23"), said flange (24) being extended by the mounting groove (22), located between said flange (24) and said rim bearing surface (21).

41. A rim (2), intended for the mounting of a tyre (1) comprising two reinforced beads (12) and delimited axially by two rim edges, spaced axially by the rim width S, comprising, when viewed in meridian section and axially towards the outside, a first rim seat and a second rim seat (23', 23"), at least the first rim seat having a generatrix the axially outer end of which lies on a circle of a diameter less than the diameter of the circle on which the axially inner end is located, the two rim seats (23', 23") having different diameters of seats.

42. A rim (2) according to Claim 41, characterised in that a protrusion or hump (25') is arranged between the axially outer end of the first rim seat (23') and the corresponding rim edge.

43. A rim (2) according to one of Claims 41 or 42, characterised in that it comprises at least one rim flange (24) which axially extends one of the rim seats (23', 23") to the inside.

44. A rim (2) according to one of Claims 42 to 43, characterised in that it comprises at least one mounting groove (22) arranged between the axially inner ends of the rim seats (23', 23").

45. A rim (2) according to one of Claims 41 to 43, characterised in that it comprises at least one bearing surface (21) intended to receive an annular supporting prop (3), said bearing surface being arranged between the axially inner ends of the two seats (23', 23") and having a generatrix the minimum diameter D of which, which is the diameter of one of its ends, is at least equal to the diameter of any portion of the rim contained axially between said end and the rim edge corresponding to the rim seat closest axially to said end.

46. A rim (2) according to Claim 45, characterised in that it comprises at least one mounting groove (22), disposed between the axially inner ends of the rim seats (23', 23").

47. A rim (2) according to Claim 46, characterised in that the bearing surface (21) axially extends the rim seat (23') of smaller diameter towards the inside and that the mounting groove (22') is interposed between the bearing surface (21) and the rim seat (23") of larger diameter.

48. A rim (2) according to one of Claims 41 to 47, characterised in that the second rim seat has a generatrix the axially outer end of which lies on a circle of a diameter less than the diameter of the circle on which the axially inner end is located, said rim seat being extended axially towards the outside by a protrusion or hump.

49. A rim (2) according to one of Claims 38 to 40, characterised in that the bearing surface (21) intended to receive a supporting prop (3) has a generatrix which axially extends towards the inside the rim seat the axially inner end of which lies on the circle of nominal diameter of the rim.

50. An assembly comprising a rim (2) according to one of Claims 38 to 40 and 45 to 48 and a tread supporting ring (3).

51. An assembly according to Claim 50, characterised in that at least one of the side walls of the supporting ring (3) serves as lateral stop for one of the beads (12) of the tyre (1) which is intended to be mounted on the corresponding seat of the rim (2).

52. An assembly according to Claim 51, characterised in that the second side wall of the supporting ring (3) is held laterally by a positioning hump (26) which axially extends the rim bearing surface (21) towards the inside.

**Patentansprüche**

1. Rollende Baugruppe mit mindestens einem Reifen (1) mit einem Radialkarkassenmantel (13), der in jedem Wulst (12) an einem Verstärkungsring (14) verankert ist, und einer Felge (2), die axial durch einen ersten Felgenrand und einen zweiten Felgenrand begrenzt ist und mit einem ersten Felgensitz und einem zweiten Felgensitz (23', 23") versehen ist, dadurch **gekennzeichnet**, daß im Meridianschnitt

a) mindestens der erste Felgensitz (23') eine solche Erzeugende aufweist, daß das axial äußere Ende der genannten Erzeugenden zur Drehachse um eine Größe beabstandet ist, die kleiner ist als der Abstand, der ihr axial inneres Ende trennt, und axial an der Außenseite durch einen Vorsprung oder Höcker (25') begrenzt ist, und

b) der Reifen (1), der auf der Felge montiert ist und auf seinen Betriebsdruck aufgepumpt ist, mit einem Radialkarkassenmantel (13) ausgestattet ist, der ein Meridianprofil mit konstanter Krümmungsrichtung mindestens in der Flanke und im Wulst besitzt, die auf derselben Seite der Baugruppe wie der erste Felgensitz gelegen sind.

2. Baugruppe nach Anspruch 1, dadurch **gekennzeichnet**, daß die Felge (2) mindestens eine Felgenrandleiste (24) axial neben einem der Felgensitze (23', 23") aufweist, wobei der maximale Durchmesser $D_F$ der genannten Felgenrandleiste größer ist als der Durchmesser $D_S$, $D_{SE}$, $D_{SI}$ eines jeden Abschnitts der Felge, der zwischen der genannten Felgenrandleiste und dem Felgenrand vorliegt, der axial der genannten Felgenrandleiste (24) nächstgelegen ist.

3. Baugruppe nach Anspruch 2, dadurch **gekennzeichnet**, daß die Felge (2) mindestens eine Montagenut (22) aufweist, die eine axiale Verlängerung der Felgenrandleiste (24) nach innen bildet.

4. Baugruppe nach einem der Ansprüche 1 bis 3, dadurch **gekennzeichnet**, daß, im Meridianschnitt gesehen, die Felgensitze (23', 23") unterschiedliche Durchmesser aufweisen.

5. Rollende Baugruppe mit einem Reifen (1) mit einem Radialkarkassenmantel (13), der in jedem Wulst (12) an einem Verstärkungsring (14) verankert ist, einer Felge (2), die axial durch einen ersten Felgenrand und einen zweiten Felgenrand begrenzt ist und mit einem ersten Felgensitz und einem zweiten Felgensitz (23', 23") ausgestattet ist, und einer Laufflächen-Notlaufabstützung (3), dadurch **gekennzeichnet**, daß im Meridianschnitt

a) mindestens der ersten Felgensitz (23') eine solche Erzeugende aufweist, daß das axial außenliegende Ende der genannten Erzeugenden zur Drehachse um ein Maß beabstandet ist, das kleiner ist als der Abstand, der ihr axial innenliegendes Ende trennt, wobei die genannte Felge (2) mindestens eine tragende Fläche (21) aufweist, die dazu bestimmt ist, eine Laufflächen-Notlaufabstützung (3) aufzunehmen, zwischen den axial innenliegenden Enden der beiden Sitze (23', 23") angeordnet ist und eine Erzeugende aufweist, deren Mindestdurchmesser, der der Durchmesser eines ihrer Enden ist, mindestens gleich ist dem Durchmesser eines jeden Felgenabschnitts, der axial zwischen dem genannten Ende und dem Felgenrand liegt, der dem Felgensitz entspricht, der dem genannten Ende axial nächstgelegen ist, und daß

b) der Reifen (1), der auf der Felge montiert ist und auf seinen Betriebsdruck aufgepumpt ist, mit einem Radialkarkassenmantel (13) ausgestattet ist, der ein Meridianprofil mit konstanter Krümmungsrichtung mindestens in der Flanke und dem Wulst aufweist, die auf derselben Seite der Baugruppe, wie der erste Felgensitz, gelegen sind, und daß

c) die ringförmige Notlaufabstützung (3) oval verformbar, vorzugsweise in Umfangsrichtung undehnbar und auf die tragende Fläche der Felge (21) aufziehbar ist.

6. Baugruppe nach Anspruch 5, dadurch **gekennzeichnet**, daß die Felge (2) mit mindestens einer Montagenut (22) ausgestattet ist, die axial zwischen einem der Felgensitze (23', 23") und der tragenden Fläche (21) gelegen ist, die dazu bestimmt ist, die Notlaufabstützung (3) aufzunehmen.

7. Baugruppe nach einem der Ansprüche 5 oder 6, dadurch **gekennzeichnet**, daß mindestens der erste Felgensitz (23') axial an der Außenseite durch einen Vorsprung oder Höcker (25') mit dem Durchmesser $D_S$, $D_{SE}$, $D_{SI}$ begrenzt ist.

8. Baugruppe nach einem der Ansprüche 5 bis 7, dadurch **gekennzeichnet**, daß die Felge (2) mindestens eine Felgenrandleiste (24) axial neben einem der Felgensitze (23', 23") aufweist, wobei der maximale Durchmesser $D_F$ der genannten Felgenrandleiste größer ist als der Durchmesser eines jeden Felgenabschnitts, der zwischen der genannten Felgenrandleiste und dem Felgenrand liegt, der axial der genannten Felgenrandleiste (24) nächstgelegen ist.

9. Baugruppe nach Anspruch 8, dadurch **gekennzeichnet**, daß die tragende Fläche (21) axial auf der Innenseite an einem der Felgensitze (23', 23") benachbart ist, wobei die Montagenut (22) axial zwischen der genannten tragenden Fläche (21) und der Felgenrandleiste (24) gelegen ist und die Notlaufabstützung (3) als axialer Anschlag für den Wulst des Reifens dient, der zu ihr benachbart ist.

10. Rollende Baugruppe nach Anspruch 9, dadurch **gekennzeichnet**, daß die tragende Fläche (21) axial innen dem ersten Felgensitz (23') benachbart ist, wobei die Felgenrandleiste (24) den zweiten Felgensitz (23') axial auf der Innenseite verlängert und die genannte Randleiste (24) ihrerseits axial auf der Innenseite durch die Montagenut (22) verlängert ist.

11. Baugruppe nach einem der Ansprüche 5 bis 10, dadurch **gekennzeichnet**, daß, im Meridianschnitt gesehen, die Sitze (23', 23") unterschiedliche Durchmesser aufweisen, und daß die tragende Fläche (21) dazu bestimmt ist, den Notlaufring (3) aufzunehmen, der axial innen dem Sitz (23') mit dem kleinsten Durchmesser benachbart ist.

12. Baugruppe nach einem der Ansprüche 4 oder 11, dadurch **gekennzeichnet**, daß der erste Felgensitz (23') der Sitz mit dem kleinsten Durchmesser ist.

13. Baugruppe nach Anspruch 12, dadurch **gekennzeichnet**, daß die Felgenrandleiste (24) axial auf der Innenseite den Felgensitz (23") mit dem größten Durchmesser verlängert.

14. Baugruppe nach einem der Ansprüche 1 bis 13, dadurch **gekennzeichnet**, daß der zweite Felgensitz (23") eine solche Erzeugende aufweist, daß das axial außenliegende Ende der genannten Erzeugenden von der Drehachse um ein Maß beabstandet ist, das kleiner ist als der Abstand, der ihr axial innenliegendes Ende trennt, wobei der genannte Sitz axial nach außen um einen Vorsprung oder Höcker (25") verlängert ist, und daß der Reifen (1), der auf der Felge montiert ist und auf seinen Betriebsdruck aufgepumpt ist, mit einem Radialkarkassenmantel (13) ausgestattet ist, der ein Meridianprofil mit konstanter Krümmungsrichtung über seine gesamte Länge aufweist.

15. Baugruppe nach einem der Ansprüche 1 bis 14, dadurch **gekennzeichnet**, daß die Felgensitze (23', 23") kegelstumpfförmige Erzeugende aufweisen, die mit der Drehachse einen Winkel $\alpha'$ einschließen, der zwischen 4° und 30° liegt und kleiner ist als der Winkel $\alpha$, den die kegelstumpfförmigen Grundflächen (12B) der Sitze des Wulstes (12) des Reifens (1) mit der genannten Drehachse einschließen.

16. Baugruppe nach einem der Ansprüche 1 bis 15, dadurch **gekennzeichnet**, daß die Vorsprünge (25', 25") axial innenliegende, kegelstumpfförmige Wände aufweisen, die mit der Drehachse einen Winkel $\gamma'$ einschließen, der zwischen 40° und 50° liegt und gleich ist dem Winkel $\gamma$, den die außenliegenden Flächen (12A) der Spitzen der Wülste (12) des Reifens (1) einschließen.

17. Baugruppe nach einem der Ansprüche 5 bis 16, dadurch **gekennzeichnet**, daß die tragende Fläche (21) eine zylindrische Erzeugende mit dem Durchmesser D aufweist, der gleich ist dem Nenndurchmesser der Felge.

18. Baugruppe nach Anspruch 17, dadurch **gekennzeichnet**, daß der Abschnitt (21) auf seinem Rand axial innenliegend einen Positionierungsvorsprung (26) aufweist, wobei der genannte Vorsprung auf der Innenseite als Anschlag für den Notlaufring (3) dient und zusammen mit der Randleiste (24) die Montagenut (22) begrenzt.

19. Baugruppe nach Anspruch 18, dadurch **gekennzeichnet**, daß die axiale Breite L, die zwischen dem Positionierungsvorsprung (26) und dem axial außenliegenden Rand liegt, der dem Sitz (23, 23') entspricht, der mit der tragenden Fläche (21) vereint ist, vorteilhafterweise höchstens gleich der Hälfte der maximalen Breite S der Felge ist.

20. Baugruppe nach einem der Ansprüche 1 bis 4, 7 bis 19, dadurch **gekennzeichnet**, daß die Höhe $h_1$ der axial außenliegenden Vorsprünge vorzugsweise höchstens gleich ist 1,25% des Nenndurchmessers der Montagefelge.

21. Baugruppe nach einem der Ansprüche 1 bis 20, dadurch **gekennzeichnet**, daß der Reifen mit einem Karkassenmantel (13) ausgestattet ist, der ein Meridianprofil besitzt, das, wenn der Reifen auf der Betriebsfelge (2) montiert ist und auf seinen Betriebsdruck aufgepumpt ist, mindestens im Wulst, der dazu bestimmt ist, auf dem ersten Felgensitz montiert zu werden, so ausgebildet ist, daß die Tangente AT am Tangentenpunkt A des genannten Profils mit dem Wulstkern (14) des genannten Wulstes (12) mit der Drehachse einen Winkel $\phi$ einschließt, der nach außen mit mindestens 70° und bevorzugt mehr als 80° offen ist.

22. Baugruppe nach einem der Ansprüche 5 bis 20, dadurch **gekennzeichnet**, daß die Höhe H' der Abstützung (3) mindestens gleich 40% der Höhe H des Karkassenmantels (13) des Reifens (1) ist, welcher ein Formverhältnis H/B aufweist, das kleiner ist als 0,4.

23. Baugruppe nach Anspruch 22, dadurch **gekennzeichnet**, daß die Abstützung (3) aus einem kautschukartigen Vulkanisat besteht, das durch Mäntel (31, 32) aus mindestens zwei Seillagen verstärkt ist, die in Umfangsrichtung unter nahezu plus oder minus 2° ausgerichtet sind.

24. Baugruppe nach Anspruch 22, dadurch **gekennzeichnet**, daß der Mindestinnendurchmesser $D_A$ der Notlaufabstützung (3), der mindestens gleich dem Durchmesser D der tragenden Fläche (21) der Felge (1) ist, höchstens um 2 mm größer ist als der genannten Durchmesser, wobei die innere Erzeugende der genannten Abstützung parallel ist zur Erzeugenden der tragenden Fläche (21) der Felge.

25. Baugruppe nach Anspruch 13, dadurch **gekennzeichnet**, daß die Differenz $D_{SE} - D_{SI}$ zwischen den Vorsprung-Durchmessern im Absolutwert zwischen 2,5% und 10% des kleinsten Durchmessers $D_{SI}(D_{SE})$ beträgt, wobei die Seite der Baugruppe mit dem kleinsten Durchmesser an der Außenseite des Fahrzeugs in bezug auf die Mittelachse des Fahrzeugs angebracht ist.

26. Reifen (1), der dazu bestimmt ist, auf einer Felge (2) montiert zu werden, die mindestens einen Sitz (23, 23") aufweist, dessen Erzeugende am einen axial außenliegenden Ende der Drehachse näherliegt als das axial innenliegende Ende, und der mindestens zwei Wülste (12) aufweist, wobei mindestens einer der genannten Wülste axial an der Außenseite in einer Spitze endet und dazu bestimmt ist, auf dem genannten Sitz montiert zu werden, und der einen Radialkarkassenmantel (13) aufweist, der in jedem Wulst (12) an mindestens einem Wulstkern (14) verankert ist, dadurch **gekennzeichnet**, daß im Meridianschnitt das Meridianprofil des Karkassenmantels (13), wenn der Reifen auf seiner Betriebsfelge (2) montiert ist und auf seinen Betriebsdruck aufgepumpt ist, eine konstante Krümmungsrichtung in der Flanke und im Wulst aufweist, die in der Spitze enden, und so ist, daß im genannten Wulst die Tangente AT an den Tangentenpunkt A des genannten Profils mit dem Wulstkern (14) des genannten Wulstes (12) mit der Drehachse einen Winkel $\phi$ einschließt, der nach außen mit mindestens 70° offen ist, wobei der genannte Wulst (12) mit üblicher axialer Breite einen Wulstsitz aufweist, dessen Erzeugende (12B) an ihrem axial außenliegenden Ende der Drehachse näherliegt als ihr axial innenliegendes Ende, die genannte Erzeugende (12B) axial an der Außenseite durch eine äußere Fläche (12A) verlängert ist, die die Wulstspitze begrenzt, und die genannte Fläche (12A) mit der Drehachse einen Winkel $\gamma$ einschließt, der radial und axial nach außen offen ist und kleiner ist als 90°.

27. Reifen nach Anspruch 26, der dazu bestimmt ist, auf einer Felge (2) montiert zu werden, deren beide Sitze (23', 23") identische Erzeugende aufweisen, dadurch **gekennzeichnet**, daß das Meridianprofil des Karkassenmantels (13) mit konstanter Krümmungsrichtung identisch ist in den beiden Wülsten, wobei die genannten Wülste (12) mit gleicher axialer Breite identische Wulstsitze aufweisen, deren Erzeugende (12B) axial nach außen durch identische Flächen (12A) verlängert sind.

28. Reifen nach einem der Ansprüche 26 oder 27, dadurch **gekennzeichnet**, daß der bzw. die Winkel $\phi$ gleich mindestens 80° ist bzw. sind.

29. Reifen nach einem der Ansprüche 26 bis 28, dadurch **gekennzeichnet**, daß die Erzeugende (12B) mit mindestens einem kegelstumpfförmigen Abschnitt ausgebildet ist, der mit der Drehachse einen Winkel $\alpha$ einschließt, der axial nach innen und radial nach außen offen ist und zwischen 10° und 45° liegt.

30. Reifen nach Anspruch 29, dadurch **gekennzeichnet**, daß die Erzeugende (12B) in ihrer Gesamtheit kegelstumpfförmig ist.

31. Reifen nach einem der Ansprüche 26 bis 29, dadurch **gekennzeichnet**, daß der Winkel $\gamma$ zwischen 40° und 50° liegt.

32. Reifen nach einem der Ansprüche 26 bis 31, dadurch **gekennzeichnet**, daß die Erzeugende(n) (12B) axial an der Innenseite durch (eine) kegelstumpfförmige Erzeugende (12C) verlängert ist bzw. sind, die dem Wulstansatz bzw. den Wulstansätzen entspricht, und mit der Drehachse einen Winkel $\beta$ bildet bzw. bilden, der axial nach innen und radial nach außen offen ist und zwischen 40° und 50° liegt.

33. Reifen nach einem der Ansprüche 26 bis 32, dadurch **gekennzeichnet**, daß jeder Wulst (12) einen Sitz (12B) aufweist, dessen Mindestdurchmesser $D_I$ derart ist, daß die Klemmwirkung auf der Felge, die als das Verhältnis $D_M/D_I$ zwischen dem Mindestdurchmesser $D_M$ des Felgensitzes (23) und dem Durchmesser $D_I$ definiert ist, mindestens gleich 1,003 ist und kleiner bleibt als 1,02.

34. Reifen nach einem der Ansprüche 26 bis 33, dadurch **gekennzeichnet**, daß die Sitze der Wülste (12) unterschiedliche Durchmesser aufweisen.

35. Felge (2), die zur Montage eines Reifens (1) bestimmt ist, der zwei verstärkte Wülste (12) aufweist, und die axial durch zwei Felgenränder begrenzt ist, die axial um die Felgenbreite S entfernt sind, mit, im Meridianschnitt gesehen und axial auf der Außenseite, einem ersten Felgensitz und einem zweiten Felgensitz (23', 23"), wobei mindestens der erste Felgensitz eine Erzeugende aufweist, deren axial äußeres Ende auf einem Kreis mit einem Durchmesser liegt, der kleiner ist als der Durchmesser des Kreises, auf dem sich das axial innere Ende befindet, und wobei der genannte Felgensitz (23') axial nach außen um einen Vorsprung oder Höcker (25') verlängert ist.

36. Felge (2) nach Anspruch 35, dadurch **gekennzeichnet**, daß sie mindestens eine Montagenut (22) aufweist, die zwischen den axial innenliegenden Enden der Felgensitze (23', 23") angeordnet ist.

**37.** Felge (2) nach einem der Ansprüche 35 oder 36, dadurch **gekennzeichnet**, daß sie mindestens eine Felgenrandleiste (24) aufweist, die einen der Felgensitze (23', 23") axial nach innen verlängert.

**38.** Felge (2) nach einem der Ansprüche 35 bis 37, dadurch **gekennzeichnet**, daß sie mindestens eine tragende Fläche (21) aufweist, die dazu bestimmt ist, eine ringförmige Notlaufabstützung (3) aufzunehmen, wobei die genannte tragende Fläche zwischen den axial innenliegenden Enden der beiden Sitze (23', 23") angeordnet ist und eine Erzeugende aufweist, deren Mindestdurchmesser D, der der Durchmesser eines ihrer Enden ist, mindestens gleich ist dem Durchmesser eines jeden Felgenabschnitts, der axial zwischen dem genannten Ende und dem Felgenrand liegt, der dem Felgensitz entspricht, der axial dem genannten Ende nächstgelegen ist.

**39.** Felge (2) nach einem der Ansprüche 35 bis 38, dadurch **gekennzeichnet**, daß der zweite Felgensitz eine Erzeugende aufweist, deren axial außenliegendes Ende auf einem Kreis mit einem Durchmesser liegt, der kleiner ist als der Durchmesser des Kreises, auf welchem sich das axial innenliegende Ende befindet, wobei der genannte Felgensitz (23") axial nach außen um einen Vorsprung oder Höcker (25") verlängert ist.

**40.** Felge (2) nach Anspruch 39, dadurch **gekennzeichnet**, daß die tragende Fläche (21) axial einen der Felgensitze (23', 23") benachbart ist, wobei die Felgenrandleiste (24) axial auf der Innenseite dem anderen Felgensitz (23', 23") benachbart ist, und wobei die genannte Randleiste (24) durch die Montagenut (22) verlängert ist, die zwischen der genannten Randleiste (24) und der genannten tragenden Felgenfläche (21) gelegen ist.

**41.** Felge (2), die zur Montage eines Reifens (1) bestimmt ist, der zwei verstärkte Wülste (12) aufweist, und die axial durch zwei Felgenränder begrenzt ist, die axial um die Felgenbreite S beabstandet sind, mit, im Meridianschnitt gesehen und axial an der Außenseite, einem ersten Felgensitz und einem zweiten Felgensitz (23', 23"), wobei mindestens der erste Felgensitz eine Erzeugende aufweist, deren axial außenliegendes Ende auf einem Kreis mit einem Durchmesser liegt, der kleiner ist als der Durchmesser des Kreises, auf welchem sich das axial innenliegende Ende befindet, wobei die beiden Felgensitze (23', 23") unterschiedliche Sitzdurchmesser aufweisen.

**42.** Felge (2) nach Anspruch 41, dadurch **gekennzeichnet**, daß zwischen dem axial äußeren Ende des ersten Felgensitzes (23') und dem entsprechenden Felgenrand ein Vorsprung oder Höcker (25') angeordnet ist.

**43.** Felge (2) nach einem der Ansprüche 41 oder 42, dadurch **gekennzeichnet**, daß sie mindestens eine Felgenrandleiste (24) aufweist, die einen der Felgensitze (23', 23") axial zur Innenseite hin verlängert.

**44.** Felge (2) nach einem der Ansprüche 42 bis 43, dadurch **gekennzeichnet**, daß sie mindestens eine Montagenut (22) aufweist, die zwischen den axial inneren Enden der Felgensitze (23', 23") angeordnet ist.

**45.** Felge (2) nach einem der Ansprüche 41 bis 43, dadurch **gekennzeichnet**, daß sie mindestens eine tragende Fläche (21) aufweist, die dazu bestimmt ist, eine ringförmige Notlaufabstützung (3) aufzunehmen, wobei die genannte tragende Fläche zwischen den axial innenliegenden Enden der beiden Sitze (23', 23") angeordnet ist und eine Erzeugende aufweist, deren Mindestdurchmesser D, der der Durchmesser eines ihrer Enden ist, mindestens gleich ist dem Durchmesser eines jeden Felgenabschnitts, der axial zwischen dem genannten Ende und dem Felgenrand liegt, der dem Felgensitz entspricht, der axial dem genannten Ende nächstgelegen ist.

**46.** Felge (2) nach Anspruch 45, dadurch **gekennzeichnet**, daß sie mindestens eine Montagenut (22) aufweist, die zwischen den axial innenliegenden Enden der Felgensitze (23', 23") angeordnet ist.

**47.** Felge (2) nach Anspruch 46, dadurch **gekennzeichnet**, daß die tragende Fläche (21) axial den Felgensitz (23') mit dem kleinsten Durchmesser nach innen verlängert, und daß die Montagenut (22') zwischen der tragenden Fläche (21) und dem Felgensitz (23") mit dem größten Durchmesser zwischengeschaltet ist.

**48.** Felge (2) nach einem der Ansprüche 41 bis 47, dadurch **gekennzeichnet**, daß der zweite Felgensitz eine Erzeugende aufweist, deren axial äußeres Ende auf einem Kreis mit einem Durchmesser liegt, der kleiner ist als der Durchmesser des Kreises, auf welchem sich das axial innenliegende Ende befindet, wobei der genannte Felgensitz axial zur Außenseite um einen Vorsprung oder Höcker verlängert ist.

**49.** Felge (2) nach einem der Ansprüche 38 bis 40, dadurch **gekennzeichnet**, daß die tragende Fläche (21), die dazu bestimmt ist, die Notlaufabstützung (3) aufzunehmen, eine Erzeugende aufweist, die axial den Felgensitz nach innen verlängert, dessen axial innenliegendes Ende auf dem Kreis mit dem Felgen-Nenndurchmesser liegt.

50. Baugruppe mit einer Felge (2) nach einem der Ansprüche 38 bis 40, 45 bis 48 sowie einem Laufflächen-Notlaufring (3).

51. Baugruppe nach Anspruch 50, dadurch **gekennzeichnet**, daß mindestens eine der Seitenwände des Notlaufrings (3) als seitlicher Anschlag für einen der Wülste (12) des Reifens (1) dient, der dazu bestimmt ist, auf dem entsprechenden Sitz der Felge (2) montiert zu werden.

52. Baugruppe nach Anspruch 51, dadurch **gekennzeichnet**, daß die zweite Seitenwand des Notlaufrings (3) seitlich durch einen Positionierungsvorsprung (26) gehalten ist, der die tragende Felgenfläche (21) axial nach innen verlängert.

FIG 1

FIG 2

FIG 3

EP 0 673 324 B1

FIG 4A

FIG 4B

FIG 4C

FIG 4D

FIG 4E

EP 0 673 324 B1